# EUROPEAN PATENT APPLICATION

(11) **EP 3 480 575 A1**
(43) Date of publication of application: **08.05.2019**
(21) Application number: 17818982.5
(22) Date of filing: 19.05.2017
(51) Int. Cl.: G01L 3/16

(54) **TORQUE SENSOR SYSTEM, TORQUE SIGNAL MEASURING METHOD, ELECTRIC POWER-ASSISTED BICYCLE**

(30) Priority: 01.07.2016 CN 201610516807
(71) Applicant: Wuhan Ttium Motor Technology Co., Ltd., Wuhan, Hubei 430000 (CN)
(72) Inventor: CHEN, Jun, Wuhan Hubei 430000 (CN); MEI, Liang, Wuhan Hubei 430000 (CN); LI, Hui, Wuhan Hubei 430000 (CN)
(74) Representative: Raffay & Fleck
(86) International application number: PCT/CN2017/085180
(87) International publication number: WO 2018/000985

(57) **Abstract**

A torque sensor system, a torque signal measuring method and an electric power-assisted bicycle, related to the technical field of transportation, solving the technical problem of current torque sensor systems generally needing a power input shaft to rotate in order to accurately measure stepping force provided by a rider. The torque sensor system comprises: a planetary gear mechanism (1), the planetary gear mechanism (1) comprising a power input component, a power output component and a torque detecting component; the torque detecting component is provided with an elastomer (2), a torque sensor (3) being provided on the elastomer (2); when external force is input via the power input component and output via the power output component of the planetary gear mechanism (1), the reaction force of the output power of the planetary gear mechanism (1) can be transmitted to the elastomer (2) of the torque detecting component, initiating deformation of the elastomer (2), while the torque sensor (3) obtains the magnitude of input torque by means of measuring the deformation of the elastomer (2).

## Description

### CROSS-REFERENCE

The present application claims priority to Chinese Patent Application No. 201610516807X, filed on July 01, 2016, entitled "Torque Sensor System, Torque Signal Measuring Method and Electric Power-Assisted Bicycle", the disclosure of which is incorporated herein by reference in its entirety.

### FIELD OF TECHNOLOGY

The present disclosure relates to the technical filed of transportation, and particularly to a torque sensor system, a torque signal measuring method and an electric power-assisted bicycle.

### BACKGROUND

An electric power-assisted bicycle is a personal vehicle equipped with a motor, a controller, etc. on the basis of an ordinary bicycle and using battery as the auxiliary energy source. When an electric power-assisted bicycle assists the man power with the electric power to provide the kinetic energy required for the bicycle to move, the torque sensor system can be used to detect the force applied by the rider to the bicycle during riding, so that the controller can determine the intention of the rider. The controller controls the output of the motor according to the power output of the rider, so that the power output of the rider matches with the output of the motor to drive the bicycle together.

In a torque sensor system of the prior art, the torque sensor is provided on a center shaft of the bicycle and rotates with the center shaft, and transmits the measurement signal of the torque sensor to the controller through a wireless signal emitting and receiving device (or other non-contact signal transmission device), so as to detect the change of the torque.

In another torque sensor system of the prior art, as for three components of a sun gear, a planetary gear (planetary carrier) and a ring gear in the planetary gear mechanism, the torque sensor takes one of them as a power input component, one of them as a power output component and the other component is provided with a limiting mechanism that limits the rotation angle thereof. Specifically, the torque input externally can be transmitted to the planetary gear mechanism through a power input component, and a reset spring acting on the limiting mechanism with an active torque is generated. When the active torque is greater than a reverse torque generated by the reset spring, an oscillating bar of the limiting mechanism will be driven to oscillate a certain angle, at the same time, since the oscillating angle information of the oscillating bar is obtained instantaneously by a torque signal mechanism, the magnitude of the torque can be determined accordingly.

However, the inventor of the application finds out that, a torque sensor system in the first type above generally has a complex structure and high production cost, and has a high power consumption for the wireless transmission and wireless power supply; as for a torque sensor system in the second type above, the planetary gear mechanism needs to generate a certain displacement each time starting the measurement, therefore the sensitivity for obtaining the torque signal is not high, and since the torque signal is obtained by the reset spring driving the oscillating bar to oscillate an angle, the measurement accuracy is inadequate.

### SUMMARY

The present disclosure provides a torque sensor system, a torque signal measuring method and an electric power-assisted bicycle, so as to solve the technical problem of the current torque sensor systems generally rotating a power input shaft to accurately measure stepping force provided by a rider.

The present disclosure provides a torque sensor system, including a planetary gear mechanism, the planetary gear mechanism including a power input component, a power output component and a torque detecting component; wherein the torque detecting component is provided with an elastomer on which a torque sensor is provided; when an external force is input via the power input component and output via the power output component of the planetary gear mechanism, a reaction force of output power of the planetary gear mechanism can be transmitted to the elastomer at the torque detecting component, initiating deformation of the elastomer, while the torque sensor obtains a magnitude of input torque by means of measuring the deformation of the elastomer.

In one of the embodiments of the application, the torque sensor system further includes a signal processing device configured to receive a torque signal of the torque sensor and transmit the torque signal to a control device.

Alternatively, the power input component is a planetary carrier of the planetary gear mechanism, the power output component is a sun gear of the planetary gear mechanism and the torque detecting component is a ring gear of the planetary gear mechanism; the elastomer and the gearing gear are fixedly connected coaxially.

Alternatively, the power input component is a sun gear of the planetary gear mechanism, the power output component is a planetary carrier of the planetary gear mechanism and the torque detecting component is a ring gear of the planetary gear mechanism; the elastomer and the ring gear are fixedly connected coaxially.

Alternatively, the power input component is a planetary carrier of the planetary gear mechanism, the power output component is a ring gear of the planetary gear mechanism and the torque detecting component is a sun gear of the planetary gear mechanism; the elastomer and the sun gear are fixedly connected coaxially.

Alternatively, the power input component is a ring gear of the planetary gear mechanism, the power output component is a planetary carrier of the planetary gear mechanism and the torque detecting component is a sun gear of the planetary gear mechanism; the elastomer and the sun gear are fixedly connected coaxially.

Alternatively, the power input component is a ring gear of the planetary gear mechanism, the power output component is a sun gear of the planetary gear mechanism and the torque detecting component is a planetary carrier of the planetary gear mechanism; the elastomer and the planetary carrier are fixedly connected coaxially.

Alternatively, the power input component is a sun gear of the planetary gear mechanism, the power output component is a ring gear of the planetary gear mechanism and the torque detecting component is a planetary carrier of the planetary gear mechanism; the elastomer and the planetary carrier are fixedly connected coaxially.

Compared with the prior art, the torque sensor system of the present disclosure has the following advantages:
The torque sensor system provided by the present disclosure includes a planetary gear mechanism, the planetary gear mechanism including a power input component, a power output component and a torque detecting component; wherein the torque detecting component is provided with an elastomer on which a torque sensor is provided. Specifically, when an external force is input via the power input component and output via the power output component of the planetary gear mechanism, a reaction force of output power of the planetary gear mechanism can be transferred to the elastomer at the torque detecting component, initiating deformation of the elastomer, while the torque sensor obtains a magnitude of input torque by means of measuring the deformation of the elastomer. It can be known from the analysis that, in the torque sensor system provided by the present disclosure, since the torque sensor is fixedly provided on the elastomer at the torque detecting component of the planetary gear mechanism, there is no need for the torque sensor to be rotated with the rotating component (the power input component or the power output component), so that the torque signal can be transmitted to the controller directly without non-contact signal transmission, thereby effectively reducing the complexity of the structure. In addition, the original torque signal can be measured directly by the torque sensor system of the present disclosure without converting the signal, so that the sensitivity and accuracy for measuring the torque signal are also high. Further, since there is no need to use the wireless transmission and wireless power supply, the use of the signal modulation device, signal amplification device, signal emission device, signal receiving device, signal demodulation device, etc. for wireless signal transmission and the conductive slip ring, inductor coil, wireless power emitting device, wireless power receiving device, rectifier and filter device, etc. for wireless power supply are avoided, so that the cost and the system power consumption are effectively reduced.

The present disclosure also provides a torque signal measuring method, including the following steps: an external force being input via a power input component of a planetary gear mechanism and output via a power output component of the planetary gear mechanism; a reaction force of output power of the planetary gear mechanism being transmitted to an elastomer at a torque detecting component, initiating deformation of the elastomer; a torque sensor obtaining a magnitude of input torque by means of measuring the deformation of the elastomer, and the magnitude of the input torque being a torque signal of the external force.

The advantages of the torque signal measuring method are the same with that of the torque sensor system above compared with the prior art, which are not repeated herein.

The present disclosure further provides an electric power-assisted bicycle, including any one of the torque sensor systems above.

Alternatively, the electric power-assisted bicycle includes a center motor connected to the torque sensor system; the planetary gear mechanism of the torque sensor system is provided on a center shaft of the electric power-assisted bicycle.

Alternatively, the planetary carrier of the torque sensor system is fixedly connected to the center shaft of the electric power-assisted bicycle, so as to be configured to receive power input through the center shaft; the sun gear of the torque sensor system is transmittedly connected to an output disk of the electric power-assisted bicycle to output power; the elastomer of the torque sensor system is fixedly provided within the center motor; the ring gear of the torque sensor system is connected to the elastomer.

Alternatively, an isolator is provided between the planetary carrier and the center shaft of the center motor; the isolator is configured to receive input power from the center shaft of the center motor, and transmit the input power to the planetary carrier.

Alternatively, the planetary gear mechanism of the torque sensor system is provided on a center shaft of the electric power-assisted bicycle.

Alternatively, the planetary carrier of the torque sensor system is fixedly connected to the center shaft, and configured to receive power input through the center shaft; the sun gear of the torque sensor system is fixedly connected to a chain disk of the electric power-assisted bicycle, and the sun gear is configured to output power; the elastomer of the torque sensor system is fixedly provided on a bicycle frame of the electric power-assisted bicycle; the ring gear of the torque sensor system is connected to the elastomer.

Alternatively, the planetary gear mechanism is configured that the planetary carrier inputs and the ring gear outputs; the torque detecting component is the sun gear; the elastomer can be fixedly connected coaxially to the sun gear through a connector.

Alternatively, the planetary gear mechanism is configured that the ring gear inputs and the planetary carrier outputs; the torque detecting component is the sun gear; the elastomer can be fixedly connected coaxially to the sun gear through a connector.

Alternatively, the electric power-assisted bicycle includes a wheel hub motor, and the planetary gear mechanism is provided in the wheel hub motor.

Alternatively, the planetary carrier of the planetary gear mechanism is fixedly connected to a wheel hub chain disk of the electric power-assisted bicycle, and power is input through the planetary carrier; the ring gear is connected to an outer rotor of the wheel hub motor and outputs power; the sun gear is fixedly connected to a wheel hub motor center shaft; the elastomer is provided on the sun gear.

Alternatively, the planetary gear mechanism is configured that the ring gear inputs power, the sun gear outputs power and the torque detecting component is the planetary carrier; the elastomer of the torque detecting component can be fixedly connected coaxially to the planetary carrier through a connector.

The advantages of the electric power-assisted bicycle are the same with that of the torque sensor system above compared with the prior art, which are not repeated herein.

### BRIEF DESCRIPTION OF THE DRAWINGS

In order to more clearly describe the specific implementations of the present disclosure or the technical solutions in the prior art, the drawings to be used in describing the specific implementations or the prior art will be briefly described below, obviously, the drawings in the following description are some specific implementations of the present disclosure, for those of ordinary skill in the art, other drawings may also be obtained based on these drawings without any creative work.
FIG.1 is a structural diagram of a torque sensor system according to an embodiment of the present disclosure;
FIG.2 is a structural diagram of another torque sensor system according to an embodiment of the present disclosure;
FIG.3 is a structural diagram of yet another torque sensor system according to an embodiment of the present disclosure;
FIG.4 is a structural diagram of the torque sensor system according to Embodiment I;
FIG.5 is a structural diagram of the torque sensor system according to Embodiment II;
FIG.6 is a structural diagram of the torque sensor system according to Embodiment III;
FIG. 7 is a flowchart illustrating the method for measuring the torque signal according to an embodiment of the present disclosure.
Wherein:

| | |
|---|---|
| 1-planetary gear mechanism; | 2-elastomer; |
| 3 -torque sensor; | 101-planetary carrier; |
| 102-sun gear; | 103-ring gear; |
| 4-connector; | 51-center motor center shaft; |
| 52-isolator; | 53-output disk; |
| 54-bicycle center shaft; | 55-bicycle chain disk; |
| 56-wheel hub chain disk; | 57-wheel hub motor outer rotor; |
| 58-wheel hub motor center shaft. | |

### DETAILED DESCRIPTION

The technical solutions of the present disclosure will be described clearly and completely with reference to the accompanying drawings hereinafter. Obviously, the described embodiments are a part but not all of the embodiments of the present disclosure. On the basis of the embodiments of the present disclosure, all other embodiments obtained by the person of ordinary skill in the art without creative work shall fall within the protection scope of the present disclosure.

It should be noted that, in the description of the present disclosure, the orientation or position relations indicated by the terms "center", "upper", "lower", "left", "right", "vertical", "horizontal", "inner", "outer" etc. are the orientation or position relations shown based on the drawings, which is merely for the convenience of describing the present disclosure and simplifying the description, and is not to indicate or imply that the device or component referred to must have the specific orientation or must be constructed and operated in the specific orientation. Therefore it cannot be construed as limiting the present disclosure. In addition, the terms "first", "second" and "third" are for the purpose of description and cannot be construed as indicating or implying the relative importance.

In the description of the present disclosure, it should be noted that unless specifically defined or limited, the terms "mount", "connect to", and "connect with" should be understood in a broad sense, for example, they may be fixed connections or may be removable connections, or integrated connections; they may be mechanical connections or electrical connections; they may also be direct connections or indirect connections through intermediate medium, or may be the internal communication between two components. For a person of ordinary skill in the art, the specific meanings of the terms above in the present disclosure can be understood according to specific situations.

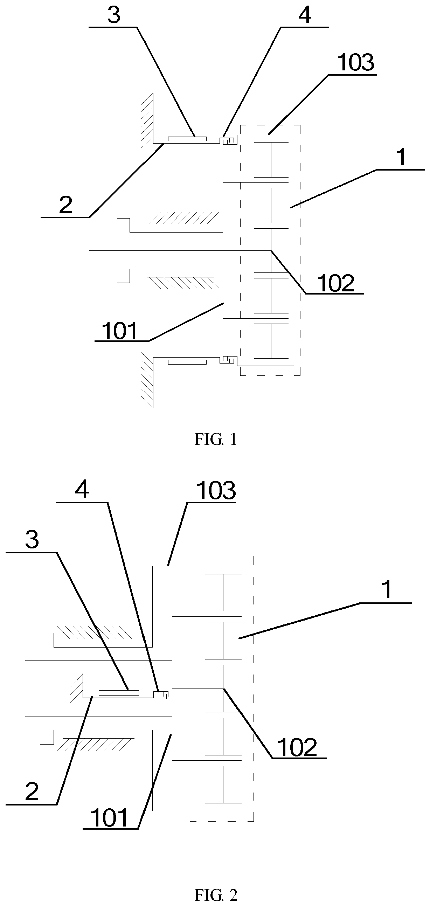

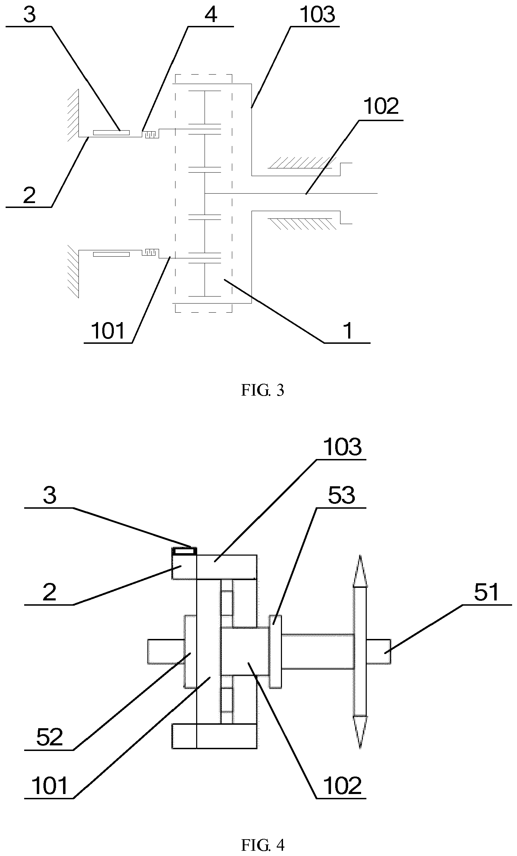

FIG.1 is a structural diagram of a torque sensor system according to an embodiment of the present disclosure; FIG.2 is a structural diagram of another torque sensor system according to an embodiment of the present disclosure; FIG.3 is a structural diagram of yet another torque sensor system according to an embodiment of the present disclosure.

As shown in FIG.1-FIG.3, a torque sensor system provided by an embodiment of the present disclosure, includes a planetary gear mechanism 1 comprising a power input component, a power output component and a torque detecting component; wherein the torque detecting component is provided with an elastomer 2 on which a torque sensor 3 is provided; when an external force is input via the power input component and output via the power output component of the planetary gear mechanism 1, a reaction force of output power of the planetary gear mechanism 1 can be transmitted to the elastomer 2 at the torque detecting component, initiating deformation of the elastomer 2, while the torque sensor 3 obtains a magnitude of input torque by means of measuring the deformation of the elastomer 2.

Compared with the prior art, the torque sensor system of the embodiments of the present disclosure has the following advantages:
In the torque sensor system provided by the embodiments of the present disclosure, as shown in FIG.1-FIG.3, it includes: a planetary gear mechanism 1, the planetary gear mechanism 1 comprising a power input component, a power output component and a torque detecting component; wherein the torque detecting component is provided with an elastomer 2 on which a torque sensor 3 is provided. Specifically, when an external force is input via the power input component and output via the power output component of the planetary gear mechanism 1, a reaction force of output power of the planetary gear mechanism 1 can be transmitted to the elastomer 2 at the torque detecting component, initiating deformation of the elastomer 2, while the torque sensor 3 obtains a magnitude of input torque by means of measuring the deformation of the elastomer 2. It can be known from the analysis that, in the torque sensor system provided by the embodiments of the present disclosure, since the torque sensor 3 is fixedly provided on the elastomer 2 at the torque detecting component of the planetary gear mechanism 1, there is no need for the torque sensor 3 to be rotated with the rotating component (the power input component or the power output component), so that the torque signal can be transmitted to the controller directly without non-contact signal transmission, thereby effectively reducing the complexity of the structure. In addition, the original torque signal can be measured directly by the torque sensor system of the embodiments of the present disclosure without converting the signal, so that the sensitivity and accuracy for measuring the torque signal are also high. At the same time, since there is no need to use the wireless transmission and wireless power supply, the use of the signal modulation device, signal amplification device, signal emission device, signal receiving device, signal demodulation device, etc. for wireless signal transmission and the conductive slip ring, inductor coil, wireless power emitting device, wireless power receiving device, rectifier and filter device, etc. for wireless power supply are avoided, so that the production cost and the system power consumption are effectively reduced.

It should be additionally noted herein that, as shown in FIG.1-FIG.3, the power input component, the power output component and the torque detecting component above may be respectively a sun gear, a planetary carrier and a ring gear, and the three components can be converted to each other. For example, as shown in FIG.1, the torque detecting component can be a ring gear 103, at which the elastomer 2 is provided, and the torque sensor 3 is provided on the elastomer 2; as shown in FIG.2, the torque detecting component can be a sun gear 102, at which the elastomer 2 is provided, and the torque sensor 3 is provided on the elastomer 2; as shown in FIG.3, the torque detecting component can be a planetary carrier 101, at which the elastomer 2 is provided, and the torque sensor 3 is provided on the elastomer 2.

In the practical application, the torque sensor system provided by the embodiments of the present disclosure further includes a signal processing device that can be configured to receive the torque signal of the torque sensor 3 above and transmit the torque signal to the control device, thereby facilitating the controller to reasonably adjust the assisting force of the motor according to the riding situation of the rider. Wherein, as shown in FIG.1, the power input component above can be the planetary carrier 101 of the planetary gear mechanism 1, the power output component above can be the sun gear 102 of the planetary gear mechanism 1, and the torque detecting component above can be the ring gear 103 of the planetary gear mechanism 1. In the specific assembly, the elastomer 2 can be fixedly connected to the ring gear 103 coaxially through a connector 4. Alternatively (which is not shown in the Drawings), the power input component can be the sun gear 102, the power output component can be the planetary carrier 101 and the torque detecting component can be the ring gear 103; correspondingly, the elastomer 2 can be fixedly connected to the ring gear 103 coaxially through the connector 4.

It should be noted that, in the embodiments of the present disclosure, the connector 4 can be provided to connect the ring gear 103 with the elastomer 2 by means of key connection.

### Embodiment I

FIG.4 is a structural diagram of the torque sensor system according to Embodiment I.

Embodiment I provides a center motor torque sensor system for electric power-assisted bicycle. In the present embodiment, the electric power-assisted bicycle includes a center motor, a center motor center shaft 51, an output disk 53, a pedal assembly (including a pedal and a crank connected with each other) and the torque sensor system as shown in FIG.4. Wherein the center motor and the pedal assembly are both connected to the center motor center shaft 51 through the planetary gear mechanism 1 of the torque sensor system, and one end of the center motor center shaft 51 is connected to the output disk 53.

Alternatively, as shown in FIG.4 combined with FIG.1, the planetary gear mechanism 1 is provided on the center motor center shaft 51, and the planetary gear mechanism 1 adopts the planetary carrier 101 to input power and adopts the sun gear 102 to output power. In the practical assembly and operation, an isolator 52 can be provided between the planetary carrier 101 of the planetary gear mechanism 1 and the center motor center shaft 51, the power is input through the center motor center shaft 51 and transmitted to the planetary carrier 101 by the isolator 52; the sun gear 102 of the planetary gear mechanism 1 can be transmittedly connected to the output disk 53, and the power is output through the sun gear 102; the ring gear 103 of the planetary gear mechanism 1 can be connected to the elastomer 2 through the connector 4, and the elastomer 2 is fixed within the center motor, so that the torque sensor 3 provided on the elastomer 2 can detect the trampling force provided to the bicycle by the rider, and transmit the trampling force to a control device to process through a signal processing device.

### Embodiment II

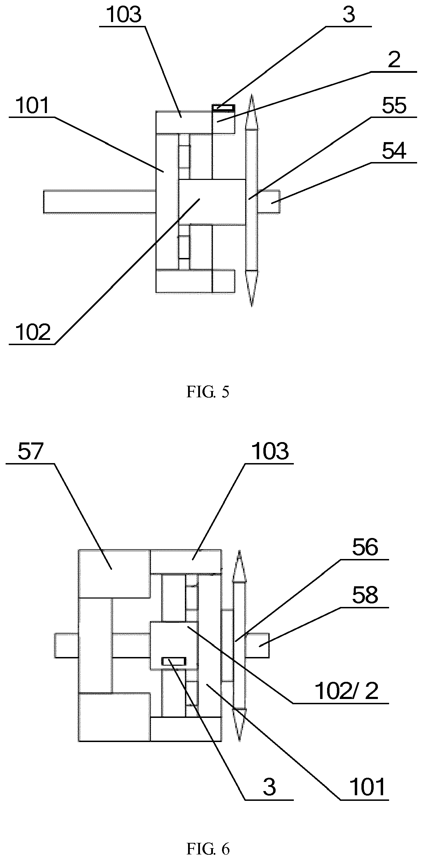

FIG.5 is a structural diagram of the torque sensor system according to Embodiment II.

Embodiment II provides a center shaft torque sensor system for electric power-assisted bicycle. In the present embodiment, the electric power-assisted bicycle includes a bicycle frame, a bicycle center shaft 54, a chain disk 55, a pedal assembly (including a pedal and a crank connected with each other) and the torque sensor system as shown in FIG.5. Wherein the pedal assembly is connected to the bicycle center shaft 54 through the planetary gear mechanism 1 of the torque sensor system, one end of the bicycle center shaft 54 is connected to the chain disk 55, and the elastomer 2 of the planetary gear mechanism 1 is connected to the bicycle frame.

Alternatively, as shown in FIG.5 combined with FIG.1, the planetary gear mechanism 1 is provided on the bicycle center shaft 54, and the planetary gear mechanism 1 adopts the planetary carrier 101 to input power and adopts the sun gear 102 to output power. In the practical assembly and operation, the planetary carrier 101 of the planetary gear mechanism 1 can be fixedly connected to the bicycle center shaft 54, the power is input and transmitted to the planetary carrier 101 through the bicycle center shaft 54; the sun gear 102 of the planetary gear mechanism 1 can be fixedly connected to the chain disk 55 of the bicycle and the power is output through the sun gear 102; the ring gear 103 of the planetary gear mechanism 1 can be connected to the elastomer 2 through the connector 4 and the elastomer 2 is fixed on the bicycle frame, so that the torque sensor 3 provided on the elastomer 2 can detect the trampling force provided to the bicycle by the rider, and transmit the trampling force to a control device to process through a signal processing device.

It should be noted that, alternatively, as shown in FIG.2, the power input component above can be the planetary carrier 101 of the planetary gear mechanism 1; the power output component above can be the ring gear 103 of the planetary gear mechanism 1; and the torque detecting component above can be the sun gear 102 of the planetary gear mechanism 1. In the specific assembly, the elastomer 2 can be fixedly connected to the sun gear 102 coaxially through a connector 4.

Alternatively (which is not shown in the drawings), the power input component can be the ring gear 103; the power output component can be the planetary carrier 101 and the torque detecting component can be the sun gear 102; correspondingly, the elastomer 2 can be fixedly connected to the sun gear 102 coaxially through the connector 4.

### Embodiment III

FIG.6 is a structural diagram of the torque sensor system according to Embodiment III. Embodiment III provides a wheel hub motor torque sensor system for electric power-assisted bicycle.

In the present embodiment, the electric power-assisted bicycle includes a wheel hub motor, a wheel hub motor center shaft 58, a wheel hub chain disk 56, a pedal assembly (including a pedal and a crank connected with each other) and the torque sensor system above. Wherein the wheel hub motor and the pedal assembly are both connected to the wheel hub motor center shaft 58 through the planetary gear mechanism 1 of the torque sensor system, and one end of the wheel hub motor center shaft 58 is connected to the wheel hub chain disk 56.

Alternatively, as shown in FIG.6 combined with FIG.2, the planetary gear mechanism 1 is provided in the wheel hub motor, and the planetary gear mechanism 1 adopts the planetary carrier 101 to input power and adopts the ring gear 103 to output power. In the practical assembly and operation, the planetary carrier 101 of the planetary gear mechanism 1 can be fixedly connected to the wheel hub chain disk 56, and the power is input from the planetary carrier 101; an isolator 52 can be provided between the ring gear 103 of the planetary gear mechanism 1 and a wheel hub motor outer rotor 57, and the power is output through the isolator 52; the sun gear 102 of the planetary gear mechanism 1 (can be) is the elastomer 2 and fixedly connected to the wheel hub motor center shaft 58, so that the torque sensor 3 provided on the sun gear 102 of the planetary gear mechanism 1 can detect the trampling force provided to the bicycle by the rider, and transmit the trampling force to a control device to process through a signal processing device.

It should be noted herein that, the inventor discovers that in the case of achieving the functions above, when the sun gear 102 of the planetary gear mechanism 1 is the elastomer 2, the structure of the torque sensor system is simpler, so as to facilitate the stability and convenience of the torque sensor system.

Alternatively, as shown in FIG.3, the power input component above can be the ring gear 103 of the planetary gear mechanism1; the power output component above can be the sun gear 102 of the planetary gear mechanism 1; and the torque detecting component above can be the planetary carrier 101 of the planetary gear mechanism 1. In the specific assembly, the elastomer 2 can be fixedly connected to the planetary carrier 101 coaxially through a connector 4.

Alternatively (which is not shown in the drawings), the power input component can be the sun gear 102, the power output component can be the ring gear 103 and the torque detecting component can be the planetary carrier 101; correspondingly, the elastomer 2 can be fixedly connected to the planetary carrier 101 coaxially through the connector 4.

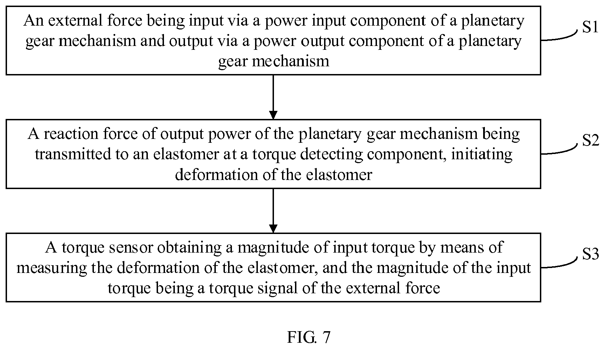

FIG. 7 is a flowchart illustrating the method for measuring the torque signal according to an embodiment of the present disclosure.

The embodiments of the present disclosure also provide a torque signal measuring method, as shown in FIG.7. The method may include the following steps: S1. external force being input via a power input component and output via a power output component of a planetary gear mechanism; S2. reaction force of output power of the planetary gear mechanism being transmitted to an elastomer at a torque detecting component, initiating deformation of the elastomer; S3. a torque sensor obtaining a magnitude of input torque by means of measuring the deformation of the elastomer, and the magnitude of the input torque being a torque signal of the external force.

The embodiments of the present disclosure further provide an electric power-assisted bicycle, including the torque sensor system according to any of the embodiments above.

The torque sensor system, the torque signal measuring method and the electric power-assisted bicycle provided by the embodiments of the present disclosure mainly have the following four advantages:
1. The torque sensor is arranged on the elastomer provided at the torque detecting component of the planetary gear mechanism, therefore the torque signal can be obtained without rotation; and the torque signal is the original torque signal directly collected rather than the converted signal, therefore the complexity of the structure is effectively reduced.
2. The torque signal is directly transmitted to the controller through the torque sensor without non-contact signal transmission, which reduces the intermediate process for conversing and processing signal, therefore the sensitivity and accuracy for measuring signal by the torque sensor are effectively improved.
3. There is no need for the torque sensor to use the wireless power supply, therefore the use of conductive slip ring, inductor coil, wireless power emitting device, wireless power receiving device, rectifier and filter device, etc. are avoided, so that not only the interference sources are effectively reduced, but also the production cost and the system power consumption are effectively reduced.
4. There is no need for the torque sensor to use the wireless signal transmission, and therefore the use of signal modulation device, signal amplification device, signal emission device, signal receiving device, signal demodulation device, etc. are avoided, so that not only the interference sources are effectively reduced, but also the signal completeness is enhanced since the signal is prevented from being interfered, and the cost and the system power consumption are reduced.

Finally, it should be noted that each embodiment above is only used to illustrate rather than to limit the technical solutions of the present disclosure; although the present disclosure has been described in detail with reference to the foregoing embodiments, those of ordinary skill in the art should understand that they can still modify the technical solutions described in the foregoing embodiments, or equivalently replace some or all of the technical features therein; and these modifications or replacements do not separate the essence of the corresponding technical solutions from the spirit and scope of the technical solutions of each of the embodiments of the present disclosure.

## Claims

1. A torque sensor system, **characterized in** comprising a planetary gear mechanism, the planetary gear mechanism comprising a power input component, a power output component and a torque detecting component; wherein the torque detecting component is provided with an elastomer on which a torque sensor is provided;
the torque sensor system is configured that when an external force is input via the power input component of the planetary gear mechanism and output via the power output component of the planetary gear mechanism, a reaction force of output power of the planetary gear mechanism is transmitted to the elastomer at the torque detecting component, initiating deformation of the elastomer, while the torque sensor obtains a magnitude of input torque by means of measuring the deformation of the elastomer.

2. The torque sensor system of claim 1, **characterized in that** it further comprises a signal processing device configured to receive a torque signal of the torque sensor and transmit the torque signal to a control device.

3. The torque sensor system of claim 1 or 2, **characterized in that** the power input component is a planetary carrier of the planetary gear mechanism, the power output component is a sun gear of the planetary gear mechanism and the torque detecting component is a ring gear of the planetary gear mechanism;
the elastomer and the ring gear are configured to be fixedly connected coaxially.

4. The torque sensor system of claim 1 or 2, **characterized in that** the power input component is a sun gear of the planetary gear mechanism, the power output component is a planetary carrier of the planetary gear mechanism and the torque detecting component is a ring gear of the planetary gear mechanism;
the elastomer and the ring gear are configured to be fixedly connected coaxially.

5. The torque sensor system of claim 1 or 2, **characterized in that** the power input component is a planetary carrier of the planetary gear mechanism, the power output component is a ring gearof the planetary gear mechanism and the torque detecting component is a sun gear of the planetary gear mechanism;
the elastomer and the sun gear are configured to be fixedly connected coaxially.

6. The torque sensor system of claim 1 or 2, **characterized in that** the power input component is a ring gearof the planetary gear mechanism, the power output component is a planetary carrier of the planetary gear mechanism and the torque detecting component is a sun gear of the planetary gear mechanism;
the elastomer and the sun gear are configured to be fixedly connected coaxially.

7. The torque sensor system of claim 1 or 2, **characterized in that** the power input component is a ring gearof the planetary gear mechanism, the power output component is a sun gear of the planetary gear mechanism and the torque detecting component is a planetary carrier of the planetary gear mechanism;
the elastomer and the planetary carrier are configured to be fixedly connected coaxially.

8. The torque sensor system of claim 1 or 2, **characterized in that** the power input component is a sun gear of the planetary gear mechanism, the power output component is a ring gearof the planetary gear mechanism and the torque detecting component is a planetary carrier of the planetary gear mechanism;
the elastomer and the planetary carrier are configured to be fixedly connected coaxially.

9. A torque signal measuring method, **characterized in** comprising the following steps:
an external force being input via a power input component of a planetary gear mechanism and output via a power output component of the planetary gear mechanism;
a reaction force of output power of the planetary gear mechanism being transmitted to an elastomer at a torque detecting component, initiating deformation of the elastomer;
a torque sensor obtaining a magnitude of input torque by means of measuring the deformation of the elastomer, and the magnitude of the input torque being a torque signal of the external force.

10. An electric power-assisted bicycle, **characterized in** comprising the torque sensor system of any one of claims 1-8.

11. The electric power-assisted bicycle of claim 10, **characterized in that** the electric power-assisted bicycle comprises a center motor connected to the torque sensor system;
the planetary gear mechanism of the torque sensor system is provided on a center shaft of the electric power-assisted bicycle.

12. The electric power-assisted bicycle of claim 11, **characterized in that**
the planetary carrier of the torque sensor system is fixedly connected to the center shaft of the electric power-assisted bicycle, so as to be configured to receive power input through the center shaft;
the sun gear of the torque sensor system is transmittedly connected to an output disk of the electric power-assisted bicycle to output power;
the elastomer of the torque sensor system is fixedly provided within the center motor; the ring gearof the torque sensor system is connected to the elastomer.

13. The electric power-assisted bicycle of claim 12, **characterized in that** an isolator is provided between the planetary carrier and the center shaft of the center motor;
the isolator is configured to receive input power from the center shaft of the center motor, and transmit the input power to the planetary carrier.

14. The electric power-assisted bicycle of claim 10, **characterized in that**
the planetary gear mechanism of the torque sensor system is provided on a center shaft of the electric power-assisted bicycle.

15. The electric power-assisted bicycle of claim 14, **characterized in that**
the planetary carrier of the torque sensor system is fixedly connected to the center shaft, and configured to receive power input through the center shaft;
the sun gear of the torque sensor system is fixedly connected to a chain disk of the electric power-assisted bicycle, and the sun gear is configured to output power;
the elastomer of the torque sensor system is fixedly provided on a bicycle frame of the electric power-assisted bicycle;
the ring gear of the torque sensor system is connected to the elastomer.

16. The electric power-assisted bicycle of claim 14, **characterized in that**
the planetary gear mechanism is configured that the planetary carrier inputs and the ring gear outputs;
the torque detecting component is the sun gear;
the elastomer is capable of being fixedly connected coaxially to the sun gear through a connector.

17. The electric power-assisted bicycle of claim 14, **characterized in that**
the planetary gear mechanism is configured that the ring gearinputs and the planetary carrier outputs;
the torque detecting component is the sun gear;
the elastomer is capable of being fixedly connected coaxially to the sun gear through a connector.

18. The electric power-assisted bicycle of claim 10, **characterized in that**
the electric power-assisted bicycle comprises a wheel hub motor, and the planetary gear mechanism is provided in the wheel hub motor.

19. The electric power-assisted bicycle of claim 18, **characterized in that**
the planetary carrier of the planetary gear mechanism is fixedly connected to a wheel hub chain disk of the electric power-assisted bicycle, and power is input through the planetary carrier;
the ring gearis connected to an outer rotor of the wheel hub motor and outputs power; the sun gear is fixedly connected to a wheel hub motor center shaft;
the elastomer is provided on the sun gear.

20. The electric power-assisted bicycle of claim 18, **characterized in that**
the planetary gear mechanism is configured that the ring gearinputs power, the sun gear outputs power and the torque detecting component is the planetary carrier;
the elastomer of the torque detecting component is capable of being fixedly connected coaxially to the planetary carrier through a connector.
